(19) Europäisches Patentamt
European Patent Office
Office européen des brevets

(11) **EP 4 273 285 B1**

(12) **EUROPÄISCHE PATENTSCHRIFT**

(45) Veröffentlichungstag und Bekanntmachung des Hinweises auf die Patenterteilung:
**16.10.2024 Patentblatt 2024/42**

(21) Anmeldenummer: **23000052.3**

(22) Anmeldetag: **05.04.2023**

(51) Internationale Patentklassifikation (IPC):
***C22C 1/02*** *(2006.01)*   ***C22C 9/04*** *(2006.01)*
***C22F 1/08*** *(2006.01)*

(52) Gemeinsame Patentklassifikation (CPC):
**C22C 9/04; C22C 1/02; C22F 1/08**

(54) **KNETLEGIERUNG FÜR EINEN LAGERWERKSTOFF**

WROUGHT ALLOY FOR A BEARING MATERIAL

ALLIAGE DE MALAXAGE POUR MATÉRIAU DE PALIER

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **04.05.2022 DE 102022001563**

(43) Veröffentlichungstag der Anmeldung:
**08.11.2023 Patentblatt 2023/45**

(73) Patentinhaber: **Wieland-Werke AG**
**89079 Ulm (DE)**

(72) Erfinder:
• **Kuhn, Hans-Achim**
**89257 Illertissen (DE)**
• **Müller, Susanne**
**89287 Bellenberg (DE)**
• **Voggeser, Volker**
**89250 Senden (DE)**

(56) Entgegenhaltungen:
**EP-B1- 3 417 083    DE-A1- 102007 029 991**

**Beschreibung**

Die Erfindung betrifft eine Knetlegierung zur Verwendung als Lagerwerkstoff, ein stangen-, rohr- oder bandförmiges Halbzeug aus einer solchen Legierung, ein Gleitelement, umfassend einen Werkstoff aus einer solchen Legierung sowie einen Turbolader umfassend ein solches Gleitelement.

Gleitelemente aus Kupfer-Zink-Legierungen werden als Ventilführung oder in Turboladern für Verbrennungsmotoren eingesetzt. Werden Verbrennungsmotoren mit ethanolhaltigen Kraftstoffen betrieben, kommt es zur Bildung von Gemischen aus Motorenöl und Ethanol. Die Gleitelemente können solchen Gemischen ausgesetzt sein. Die Lagerwerkstoffe müssen deshalb korrosionsbeständig in derartigen ethanolhaltigen Gemischen sein. Ferner verlangen gesetzliche Vorschriften, den Bleianteil im Werkstoff auf ein Minimum zu reduzieren.

Eine bekannte Kupfer-Zink-Legierung für Gleitelemente ist CuZn31Si1. Der Legierung können bis zu 0,8 Gew.-% Blei beigemengt sein, um die Zerspanbarkeit des Werkstoffs zu verbessen. Der hohe Anteil von Kupfer in dieser Legierung macht das Gleitelement teuer.

Aus der Druckschrift DE 10 2016 001 994 A1 ist ein Gleitelement aus einer Kupfer-Zink-Legierung mit 60,0 bis 64,0% Cu, 0,2 bis 0,5% Si, 0,6 bis 1,2% Fe, wahlweise noch bis maximal 1,5% Sn, bis maximal 0,25% Pb, bis maximal 0,08% P, Rest Zn und unvermeidbare Verunreinigungen bekannt. Die Kupfer-Zink-Legierung weist dabei ein aus $\alpha$- und $\beta$-Phase bestehendes Gefüge mit einem Volumenanteil der $\alpha$-Phase von mindestens 90% auf, wobei in das Gefüge Eisensilizide eingelagert sind.

Der Erfindung liegt die Aufgabe zugrunde, eine Knetlegierung für einen Lagerwerkstoff mit verbesserter Korrosionsbeständigkeit gegen Ethanol-Öl-Gemische bereitzustellen. Hinsichtlich der mechanischen Eigenschaften sollte die Legierung eine Härte von mindestens 190 HV10, eine Zugfestigkeit $R_m$ von mindestens 600 MPa, ein Streckgrenze $R_{p0,2}$ von mindestes 500 MPa und eine Bruchdehnung $A_5$ von mindestes 11 % aufweisen. Für ein günstiges Verschleißverhalten sollten mit der Legierung Reibbeiwerte unter 0,06 erreicht werden können. Die Biegewechselfestigkeit sollte auf dem Niveau von bekannten Lagerwerkstoffen sein.

Die Erfindung wird durch die Merkmale des Anspruchs 1 wiedergegeben. Die weiteren rückbezogenen Ansprüche betreffen vorteilhafte Aus- und Weiterbildungen der Erfindung.

Die Erfindung betrifft eine Knetlegierung für einen Lagerwerkstoff zum Einsatz als Ventilführung oder in Turboladern von mit ethanolhaltigen Kraftstoffen betriebenen Verbrennungsmotoren, wobei die Knetlegierung folgende Zusammensetzung in Gew.-% aufweist:

| | |
|---|---|
| Zn: | 25,0 - 34,0 % |
| Fe: | 0,8 - 1,2 % |
| Sn: | 0,8 - 1,2 % |
| Al: | 1,3 - 1,7 % |
| Si: | 0,2 - 0,45 % |
| Pb: | bis zu 0,1 % |

Rest Kupfer und unvermeidbare Verunreinigungen, wobei die Summe aller Elemente, die nicht zur Gruppe der Elemente Kupfer, Zink, Eisen, Zinn, Aluminium und Silicium gehören, höchstens 0,3 Gew.-% beträgt, und wobei die Legierung ein Gefüge aufweist, in das Ausscheidungen in Form von Siliciden mit einem Anteil von 0,5 bis 2,0 Vol.-% eingelagert sind.

Werkstoffe aus dieser Legierung zeichnen sich durch eine Härte von mindestens 190 HV10, eine Zugfestigkeit $R_m$ von mindestens 600 MPa, eine Streckgrenze $R_{p0,2}$ von mindestens 500 MPa und eine Bruchdehnung $A_5$ von min-destens 11 % aus. Aufgrund der hohen Härte sind die Werkstoffe unter Reibbelastung sehr verschleißbeständig. Die Werkstoffe ergeben in Verschleißversuchen sowohl unter konstanter Dauerbelastung als auch bei stufenweiser Anhebung der Belastung Reibbeiwerte auf dem Niveau von bisher eingesetzten Werkstoffen, wie beispielsweise die bleihaltige Legierung CuZn31Si1 oder die aufgrund der Anteile an Nickel und Zinn sehr teure Legierung CuNi6Sn6. Auch unter dynamischer Wechselbelastung, also unter oszillierendem Aufbringen von Druck- und Zugspannung, zeigt die Legierung Ergebnisse, die ähnlich sind wie Ergebnisse, die an CuZn31Si1 gewonnen werden. Liegt bei der Legierung der Zink-Anteil zwischen 32 und 34 Gew.-%, werden sogar bessere Ergebnisse erzielt als mit CuZn31Si1. Die vorgeschlagene Legierung stellt somit eine bleifreie und kostengünstige Alternative zu bekannten Werkstoffen dar.

Der Anteil von 1,3 - 1,7 Gew.-% Aluminium macht die Legierung beständig gegen Korrosion in ethanolhaltigen Medien, wie beispielsweise Ethanol-Öl-Gemische. Ferner verbessert die Zugabe von Aluminium das Verhältnis von Festigkeit zu Duktilität. Bei einer Streckgrenze $R_{p0,2}$ von mindestens 500 MPa ist eine Bruchdehnung $A_5$ von mindestens 15 % erreichbar. Alternativ können Legierungszusammensetzungen eingestellt werden, bei denen die Zugfestigkeit $R_m$ mindestens 650 MPa beträgt und gleichzeitig die Bruchdehnung mindestens 11 % beträgt. Allgemein kann die Relation zwischen Zugfestigkeit $R_m$ in MPa und der mindestens erreichbaren Bruchdehnung $A_5$ in % durch folgende Formel

quantifizier werden:

$$A_5 \geq -0{,}2292 \cdot R_m + 161$$

Durch die Auswahl der Elemente Kupfer und Zink kann der Anteil der β-Phase im Gefüge eingestellt werden. Bei einem Zink-Anteil zwischen 25 und 28 Gew.-% ist keine β-Phase vorhanden. Das Gefüge besteht nur aus α-Phase mit darin eingelagerten Siliciden. Bei Zink-Anteilen größer 28 Gew.-% weist das Gefüge Anteile an β-Phase auf, deren Flächenanteil bei einem Zink-Anteil von 30 Gew.-% ungefähr 15 % beträgt, bei einem Zink-Anteil von 31 Gew.-% ungefähr 25 % beträgt und bei einem Zink-Anteil von 33 Gew.-% ungefähr 50 % beträgt. Obwohl die β-Phase korrosionsanfälliger ist als die α-Phase, ist die Legierung selbst bei einem β-Phasen-Anteil von 50 % noch beständig gegenüber Korrosion in EthanolÖl-Gemischen. Ursache hierfür ist die Schutzwirkung des Aluminiums. Die Schutzwirkung des Aluminiums ermöglicht somit, den Anteil der β-Phase in einem großen Bereich an die Einsatzbedingungen anzupassen, ohne die Korrosionsbeständigkeit zu beeinflussen. Legierungszusammensetzungen, die keine β-Phase aufweisen, sind sehr duktil und lassen sich gut kaltumformen. Solche Legierungen weisen eine Bruchdehnung $A_5$ von mindestens 20 % auf. Mit zunehmendem Anteil an β-Phase, also mit zunehmendem Zn-Anteil, reduziert sich die Duktilität geringfügig. Bei einem Anteil an β-Phase von 30 % wird immer noch eine Bruchdehnung $A_5$ von 15 % erreicht. Dagegen verbessert sich mit zunehmendem Zn-Anteil die Festigkeit und die Zerspanbarkeit. Bei einem Zink-Anteil zwischen 29 und 34 Gew.-% kann eine Zugfestigkeit von mindestens 630 MPa bei einer Bruchdehnung $A_5$ von mindestens 11 % erreicht werden.

Eisen und Silicium bilden Eisensilicide, die als Ausscheidungen in das Gefüge eingelagert sind. Eisensilicide sind als Hartphasen die Ursache für die gute Verschleißbeständigkeit des Werkstoffs. Bei einem Silicium-Anteil unter 0,2 Gew.-% würden zu wenig Eisensilicide gebildet werden. Bevorzugt beträgt der Silicium-Anteil mindestens 0,27 Gew.-%. Ein Silicium-Anteil von über 0,45 Gew.-% würde zu einer größeren Ausbildung der β-Phase führen und somit die Duktilität reduzieren. Insbesondere weist die Legierung ein Gefüge auf, in dem Eisensilicid-Ausscheidungen mit kreisrunder oder elliptischer Form mit einem äquivalenten Durchmesser von mindestens 2 μm vorhanden sind. Die Dichte dieser Ausscheidungen beträgt mindestens 1000 pro mm$^2$ und höchstens 2500 pro mm$^2$. Ferner sind im Gefüge Eisensilicid-Ausscheidungen mit kreisrunder oder elliptischer Form mit einem äquivalenten Durchmesser von mindestens 5 μm vorhanden, und die Dichte dieser Ausscheidungen beträgt mindestens 40 pro mm$^2$ und höchstens 300 pro mm$^2$. Wenn β-Phase in der Legierung vorhanden ist, sind die Eisensilicid-Ausscheidungen entweder in die α-Phase eingebettet oder sie befinden sich an der Phasengrenze zwischen der α-Phase und der β-Phase. Die β-Phase ist weitgehend frei von Eisensilicid-Ausscheidungen.

Der Anteil an Blei beträgt maximal 0,1 Gew.-%, um den gesetzlichen Vorgaben zu entsprechen. Auch bei Blei-Anteilen von maximal 0,07 Gew.-%, bevorzugt maximal 0,04 Gew.-% weist die Legierung noch ein sehr gutes Reibverhalten sowie sehr gute Zerspanungseigenschaften auf.

Die Summe aller unvermeidbaren Verunreinigungen sollte zusammen mit dem Anteil an Blei nicht mehr als 0,3 Gew.-% betragen, damit diese Elemente die Legierung nicht negativ beeinflussen. Insbesondere sollte der Mn-Anteil höchstens 0,1 Gew.-% betragen, der Ni-Anteil höchstens 0,1 Gew.-%, bevorzugt maximal 0,05 Gew.-%, besonders bevorzugt maximal 100 Gew.-ppm, der Anteil an Bi maximal 0,05 Gew.-% und der Anteil an P maximal 0,01 Gew.-% betragen. Mangan und Nickel konkurrieren mit Eisen bei der Bildung von Siliciden. Die Beschränkung von Mn und Ni bewirkt, dass überwiegend die für das Verschleißverhalten günstigen Eisensilicide gebildet werden. Bi ist ein Element, das zu Problemen führt, wenn es in den Werkstoffkreislauf eingetragen wird.

Bevorzugt kann die Summe aller Elemente, die nicht zur Gruppe der Elemente Kupfer, Zink, Eisen, Zinn, Aluminium, Silicium und Blei gehören, höchstens 0,15 Gew.-%, besonders bevorzugt höchstens 0,1 Gew.-% betragen.

Im Rahmen einer Ausführungsform der Erfindung kann der als Rest in der Legierung vorhandene Cu-Anteil 64,8 bis 71,0 Gew.-% betragen. Dies ist gleichbedeutend damit, dass die Summe aller Legierungsbestandteile, die nicht Kupfer sind, 29,0 bis 35,2 Gew.-% beträgt. Dies ergibt Legierungen mit besonders großer Duktilität. Bei einem Cu-Anteil in diesem Bereich beträgt die Bruchdehnung mindestens 15 %, bei einem Cu-Anteil von mindestens 68 Gew.-% beträgt die Bruchdehnung mindestens 20 %.

Im Rahmen einer weiteren Ausführungsform der Erfindung kann der Zn-Anteil 28,5 bis 33,5 Gew.-% betragen. Dies ergibt Legierungen mit besonders großer Festigkeit. Bei einem Zn-Anteil in diesem Bereich beträgt die Zugfestigkeit mindestens 630 MPa, bei einem Zn-Anteil von mindestens 31 Gew.-% beträgt die Zugfestigkeit mindestens 650 MPa.

Vorteilhafterweise kann der Al-Anteil 1,4 bis 1,6 Gew.-% betragen. Bei einem Al-Anteil von mindestens 1,4 Gew.-% ist die Korrosionsbeständigkeit der Legierung besonders hoch. Bei einem Al-Anteil von nicht mehr als 1,6 Gew.-% ist auch bei großen Anteilen an Zink das Risiko einer Versprödung des Werkstoffs sehr gering.

Bevorzugt kann die Knetlegierung zur Herstellung von stangen-, rohr- oder bandförmigem Halbzeug und zur Herstellung von Gleitelementen, die eine solche Legierung umfassen, verwendet werden. Derartige Gleitelemente können vorteilhafterweise als Lager in Turboladern oder als Ventilführung eingesetzt werden.

Die Erfindung wird anhand von Ausführungsbeispielen und Vergleichsbeispielen näher erläutert.

In einem Induktionsofen wurden Legierungen mit der Zusammensetzung gemäß Tabelle 1 erschmolzen und jeweils in Quaderform abgegossen.

Tabelle 1: chemische Zusammensetzung der Proben. (*) Die Proben Nr. 6, 7 und 8 sind Vergleichsproben

| Probe Nr. | Cu | Zn | Al | Sn | Fe | Si |
|---|---|---|---|---|---|---|
| | Gew.-% | Gew.-% | Gew.-% | Gew.-% | Gew.-% | Gew.-% |
| 1 | 70,85 | 25,32 | 1,38 | 1,14 | 0,97 | 0,34 |
| 2 | 68,92 | 27,32 | 1,40 | 1,04 | 0,96 | 0,36 |
| 3 | 67,03 | 29,25 | 1,53 | 0,94 | 0,89 | 0,36 |
| 4 | 64,91 | 31,22 | 1,46 | 0,82 | 1,16 | 0,43 |
| 5 | 63,07 | 33,19 | 1,58 | 1,03 | 0,84 | 0,29 |
| 6 (*) | 62,24 | 35,66 | 0 | 1,03 | 0,75 | 0,32 |
| 7 (*) | 64,54 | 33,34 | 0 | 1,02 | 0,81 | 0,29 |
| 8 (*) | 62,40 | 35,52 | 0 | 1,04 | 0,81 | 0,23 |

Die Summe aller nicht in der Tabelle genannten Elemente betrug jeweils weniger als 0,05 Gew.-% und ist rechnerisch im Anteil von Zink enthalten.

Die quaderförmigen Gussprodukte wurden warmgewalzt, wobei die Dicke um 40 % reduziert wurde. Anschließend wurde die oxidbehaftete Oberfläche durch Fräsen entfernt. Dabei wurde auf jeder Seite des warmgewalzten Zwischenprodukts ungefähr 1 mm Material abgetragen. Die Zwischenprodukte wurden unter Reduktion der Dicke von 10 mm auf 3 mm kaltgewalzt und die so hergestellten Bleche anschließend bei 500 °C für drei Stunden geglüht. Die geglühten Bleche wurden mit Ausnahme von Probe Nr. 5 an eine Enddicke von 1,5 mm gewalzt. Bei Probe Nr. 5 betrug die Enddicke 1,65 mm. Zuletzt wurden alle Proben bei 300 °C für drei Stunden geglüht. An den Proben wurden mechanische Kennwerte ermittelt und Biegewechselversuche durchgeführt. An den Proben Nr. 3 und Nr. 4 wurden Verschleißtests durchgeführt.

Ferner wurden an den Proben Korrosionstests mit einem Ethanol-Öl-Gemisch durchgeführt. Hierfür wurde handelsübliches Motorenöl mit 6 Gew.-% Ethanol vermischt. Die Proben wurden bei 160 °C für 200 Stunden diesem Gemisch ausgesetzt und anschließend wurde der Massenverlust der Proben bestimmt. Als Vergleichsproben dienten zusätzlich Proben aus den Legierungen CuZn31Si und CuZn37Mn3Al2PbSi.

Tabelle 2 zeigt die mechanischen Kennwerte der Proben und dokumentiert ihre Korrosionsbeständigkeit.

Tabelle 2: Mechanische Kennwerte und Korrosionsbeständigkeit. (*) Die Proben Nr. 6, 7 und 8 sind Vergleichsproben

| Probe Nr. | Härte HV10 | Streckgrenze $R_{p0,2}$ | Zugfestigkeit $R_m$ | Bruchdehnung $A_5$ | Korrosionsbeständigkeit |
|---|---|---|---|---|---|
| | | in MPa | in MPa | in % | |
| 1 | 193 | 506 | 618 | 22,0 | Gut |
| 2 | 193 | 513 | 626 | 21,8 | Gut |
| 3 | 199 | 517 | 632 | 17,9 | Sehr gut |
| 4 | 235 | 515 | 654 | 15,0 | Sehr gut |
| 5 | 227 | 509 | 663 | 11,5 | Sehr gut |
| 6 (*) | 171 | 418 | 538 | 23,0 | Schlecht |
| 7 (*) | 163 | 409 | 531 | 19,0 | Schlecht |
| 8 (*) | 163 | 390 | 522 | 28,7 | schlecht |

Die Proben Nr. 1 bis 5, die alle Aluminium enthalten, erreichen eine Härte von über 190 HV10. Ihre Streckgrenze $R_{p0,2}$ beträgt mindestens 500 MPa und ihre Zugfestigkeit $R_m$ liegt zwischen 615 und 665 MPa. Mit zunehmender Zugfestigkeit nimmt die Bruchdehnung $A_5$ von 22,0 % auf 11,5 % ab. Die Vergleichsproben Nr. 6, 7 und 8, die kein Aluminium enthalten, weisen eine geringere Härte und deutlich geringere Werte für die Streckgrenze und die Zugfestigkeit auf.

Nach den Korrosionstests wiesen die Proben Nr. 3, 4 und 5 die geringsten Massenverluste auf. Die Massenverluste der Proben Nr.1 und 2 waren nur geringfügig größer. Dagegen wurden an den Proben ohne Aluminium (Proben Nr. 6, 7 und 8) sowie an den Proben aus den Legierungen CuZn31Si und CuZn37Mn3Al2PbSi deutlich größere Massenverluste festgestellt. Ferner zeigte die Probe aus CuZn37Mn3Al2PbSi eine deutlich andere Oberfläche im Vergleich zu den übrigen Proben. Insbesondere der Vergleich der Proben Nr. 1 bis 5 mit den Proben Nr. 6 bis 8 demonstriert den positiven Einfluss des Aluminiums auf die Korrosionsbeständigkeit der Legierung in ethanolhaltigen Medien. Zu beachten ist dabei jedoch, dass die Al-haltige Legierung CuZn37Mn3Al2PbSi einen deutlichen Korrosionsangriff aufweist. Dies zeigt, dass die gesamte Zusammensetzung der Legierung, insbesondere der Anteil an Zink sowie ein möglicher Anteil an Mangan, Einfluss auf die Korrosionsbeständigkeit haben.

Die Biegewechselversuche ergaben für alle Proben eine Biegewechselfestigkeit, die auf dem Niveau von heute für Gleitlager verwendete Kupfer-Zink-Legierungen liegt. Besonders gute Ergebnisse wurden mit den Proben Nr. 3 und Nr. 5 erzielt.

Bei Verschleißtest ergaben die Proben Nr. 3 und Nr. 4 im Dauerlaufbetrieb Reibbeiwerte zwischen 0,05 und 0,06. Diese Werte liegen auf dem Niveau von heute verwendeten Lagerwerkstoffen. Im Stufenlauf-Modus, bei dem die Anpresskraft von 1,2 N/mm$^2$ in 40 Stufen auf 11 N/mm$^2$ erhöht wurde, ergaben diese beiden Proben Reibbeiwerte von ungefähr 0,03. Diese Werte sind etwas günstiger als die von heute verwendeten Lagerwerkstoffen.

**Patentansprüche**

1.  Knetlegierung für einen Lagerwerkstoff zum Einsatz als Ventilführung oder in Turboladern von mit ethanolhaltigen Kraftstoffen betriebenen Verbrennungsmotoren, wobei die Knetlegierung folgende Zusammensetzung in Gew.-% aufweist:

    | | |
    |---|---|
    | Zn: | 25,0 - 34,0 % |
    | Fe: | 0,8 - 1,2 % |
    | Sn: | 0,8 - 1,2 % |
    | Al: | 1,3 - 1,7 % |
    | Si: | 0,2 - 0,45 % |
    | Pb: | bis zu 0,1 % |

    Rest Kupfer und unvermeidbare Verunreinigungen, wobei die Summe aller Elemente, die nicht zur Gruppe der Elemente Kupfer, Zink, Eisen, Zinn, Aluminium und Silicium gehören, höchstens 0,3 Gew.-% beträgt, und wobei die Legierung ein Gefüge aufweist, in das Ausscheidungen in Form von Siliciden mit einem Anteil von 0,5 bis 2,0 Vol.-% eingelagert sind.

2.  Knetlegierung nach Anspruch 1, **dadurch gekennzeichnet, dass** der Cu-Anteil 64,8 bis 71,0 Gew.-% beträgt.

3.  Knetlegierung nach Anspruch 1 oder 2, **dadurch gekennzeichnet, dass** der Zn-Anteil 28,5 bis 33,5 Gew.-% beträgt.

4.  Knetlegierung nach einem der Ansprüche 1 bis 3, **dadurch gekennzeichnet, dass** der Al-Anteil 1,4 bis 1,6 Gew.-% beträgt.

5.  Stangen-, rohr- oder bandförmiges Halbzeug aus einer Knetlegierung gemäß einem der vorstehenden Ansprüche.

6.  Gleitelement umfassend einen Werkstoff aus einer Knetlegierung gemäß einem der Ansprüche 1 bis 4.

7.  Turbolader umfassend ein Gleitelement gemäß Anspruch 6.

**Claims**

1.  Wrought alloy for a bearing material for use as a valve guide or in turbochargers of internal combustion engines which are operated with ethanol-containing fuels, wherein the wrought alloy has the following composition in % by weight:

| Zn: | 25.0 - 34.0% |
|---|---|
| Fe: | 0.8 - 1.2% |
| Sn: | 0.8 - 1.2% |
| Al: | 1.3 - 1.7% |
| Si: | 0.2 - 0.45% |
| Pb: | up to 0.1% |

the balance being copper and inevitable impurities, wherein the sum of all the elements which do not belong to the group of elements copper, zinc, iron, tin, aluminium and silicon is a maximum of 0.3% by weight, and wherein the alloy has a structure in which precipitations are embedded in the form of silicides having a proportion of from 0.5 to 2.0% by volume.

2. Wrought alloy according to claim 1, **characterised in that** the Cu proportion is from 64.8 to 71.0% by weight.

3. Wrought alloy according to claim 1 or 2, **characterised in that** the Zn proportion is from 28.5 to 33.5% by weight.

4. Wrought alloy according to any one of claims 1 to 3, **characterised in that** the Al proportion is from 1.4 to 1.6% by weight.

5. Rod-like, tubular or strip-like semi-finished product comprising a wrought alloy according to any one of the preceding claims.

6. Sliding element comprising a material comprising a wrought alloy according to any one of claims 1 to 4.

7. Turbocharger comprising a sliding element according to claim 6.

**Revendications**

1. Alliage de corroyage pour un matériau de coussinet destiné à être utilisé e tant que guidage de soupape ou dans des turbocompresseurs de moteurs à combustion fonctionnant avec des carburants à base d'éthanol, dans lequel l'alliage de corroyage présente la composition suivante en pourcentage en poids :

| Zn : | 25,0 - 34,0 % |
|---|---|
| Fe : | 0,8 - 1,2 % |
| Sn : | 0,8 - 1,2 % |
| Al : | 1,3 - 1,7 % |
| Si : | 0,2 - 0,45 % |
| Pb : | jusqu'à 0,1 % |

le reste étant du cuivre et des impuretés inévitables, dans lequel la somme de tous les éléments qui ne font pas partie du groupe constitué du cuivre, du zinc, du fer, de l'étain, de l'aluminium et du silicium, est égale au maximum à 0,3 % en poids et dans lequel l'alliage présente une texture dans laquelle des précipitations sous forme de siliciures sont incorporées dans une proportion de 0,5 à 2,0 % en volume.

2. Alliage de corroyage selon la revendication 1, **caractérisé en ce que** la part de Cu représente 64,8 à 71,0 % en poids.

3. Alliage de corroyage selon la revendication 1 ou 2, **caractérisé en ce que** la part de Zn représente 28,5 à 33,5 % en poids.

4. Alliage de corroyage selon l'une des revendications 1 à 3, **caractérisé en ce que** la part de Al représente 1,4 à 1,6 % en poids.

5. Produit semi-fini en forme de tige, de tube ou de ruban, constitué d'un alliage de corroyage selon l'une des revendications précédentes.

6. Élément de glissement comprenant un matériau constitué d'un alliage de corroyage selon l'une des revendications 1 à 4.

7. Turbocompresseur comprenant un élément de glissement selon la revendication 6.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016001994 A1